# EUROPEAN PATENT SPECIFICATION

(11) **EP 3 670 113 B1**
(45) Date of publication and mention of the grant of the patent: **22.02.2023**
(21) Application number: 19209740.0
(22) Date of filing: 18.11.2019
(51) Int. Cl.: B25J 15/00

(54) **POSITIONING DEVICE**
POSITIONIERUNGSVORRICHTUNG
DISPOSITIF DE POSITIONNEMENT

(30) Priority: 17.12.2018 GB 201820507
(43) Date of publication of application: 24.06.2020
(73) Proprietor: Rolls-Royce plc, London N1 9FX (GB)
(72) Inventor: Norton, Andrew, Derby, Derbyshire DE24 8BJ (GB); Kell, James, Derby, Derbyshire DE24 8BJ (GB); Danvers, Thomas, Derby, Derbyshire DE24 8BJ (GB)
(74) Representative: Rolls-Royce plc

(56) References cited:
- US-A1- 2008 147 000
- US-A1- 2016 067 750
- US-A1- 2018 264 640

## Description

### Field of the Disclosure

The present disclosure relates to a positioning device. In particular, the present disclosure relates to a positioning device for locating an end effector (tool) in a cavity e.g. in a cavity within a gas turbine engine.

### Background of the Disclosure

There is often a need to carry out inspection, evaluation or maintenance of on-wing gas turbine engines. It is known to perform an on-wing borescope inspection of blades/stators in the front section of the engine whilst rotating the engine shaft (e.g. the intermediate pressure (IP) shaft) using a turning tool. It is also known to effect on-wing cleaning of combustor tiles using a spray cleaning/abrading tool.

These tools are typically mounted on a deployment device such a rigid or articulated robotic arm. The deployment devices have to be designed specifically for the location of their deployment to ensure that they can guide the tool to the appropriate location. This design is based on the 3D Computer Aided Design (CAD) of the engine and is unique for each individual location within the engine. This requires significant design time and multiple deployment tools are required for each engine.

Articulating deployment devices can be steered to and deployed in more than one engine region but they are not useful where the tool generates a reaction force. For example, where the tool is a fluid jet or a media blaster, the reaction force can cause unwanted movement of the tool (because the deployment device is not rigid) and can cause it to be incorrectly positioned.

Soft robotics is an area of robotics where soft, flexible components such as pneumatic/hydraulic bladders, dielectric elastomeric actuators (which change shape upon application of a high voltage electric field) or shape memory alloys are used as artificial "muscles" to provide robotic devices capable of intricate movements.

United States Patent Application US 2018/264640 A1 describes a remotely operated spray nozzle for spraying treatment a treatment material on a surface of an enclosed space. D1 discloses that the apparatus comprises an elongate member. A handle can be arranged to rotate the spray nozzle about a longitudinal axis. United States Patent Application US 2008/147000 A1 discloses a catheter having an actuator for moving the distal tip of the catheter in a desired direction. The catheter can have a number of actuators on the distal end to position the tip. United States Patent Application US 2016/067750 A1 describes a wand for cleaning a gas turbine engine. The wand has a conduit that is shaped with a jog for use in an upwardly extending air inlet.

There is a need for a device for positioning a tool in a desired location e.g. in a cavity within a gas turbine engine, where the device can be used in multiple locations within the gas turbine engine and wherein the device can resist movement of the tool upon generation of a reaction force.

### Summary

In a first aspect, there is provided a device for positioning and using a tool within a cavity having a cavity wall, the device comprising a flexible deployment device carrying the tool wherein the deployment device further comprises a soft robotics fixturing element adjustable between a contracted deployment configuration during positioning of the tool and an expanded bracing configuration for abutment with the cavity wall during use of the tool.

By providing a flexible deployment device, the tool can be accurately positioned at any one of a number of different desired locations e.g. within a gas turbine engine or across a number of different gas turbines, without the need for a device design tailored to each location based on the 3D CAD of the location. The soft robotics fixturing element acts to resist any reaction force generated during use of the tool by abutment of the expanded "muscles" of the soft robotics fixturing element against the cavity wall. The "muscles" in the soft robotics fixturing element can be contracted during positioning and removal of the device/tool to allow easy manipulation of the device within confined spaces.

The flexible deployment device comprises a flexible deployment arm. The term "flexible" is used herein to define that the deployment device/arm has multiple degrees of freedom to move (and it need not necessarily be made of flexible/non-rigid material/components).

The deployment arm is an articulated or segmented arm, or an articulated guide tube and insertion element.

The deployment arm is a robotic arm e.g. a snake-arm robot.

The deployment arm may comprise cables which may be manually-actuated or motoractuated to effect movement/flexing of the deployment arm. The deployment arm may comprise pneumatic articulation.

The deployment device may comprise a flexible (e.g. an articulating) guide tube carrying the fixturing element and a flexible insertion element carrying the tool. The insertion element is guided to the required location within the cavity within the bore of the guide tube.

The deployment arm is a soft robotic arm i.e. a compliant robotic arm carrying multiple deployment actuators.

The soft robotics fixturing element comprises one or more fixturing actuators. In these embodiments, the deployment arm and the fixturing element may be integrally formed.

At least one or each deployment actuator and/or fixturing actuator may comprise an inflatable bladder e.g. a pneumatic or hydraulic bladder.

In the expanded configuration of the fixturing element, the or each fixturing actuator bladder may be at least partially (e.g. substantially fully) filled with air/fluid and in the contracted configuration of the fixturing element, the or each fixturing actuator bladder may be at least partially (e.g. substantially fully) drained of air/fluid.

At least one or each deployment actuator and/or fixturing actuator may comprise a dielectric elastomeric actuator (DEA) e.g. at least one or each deployment and/or fixturing actuator may include a dielectric elastomeric membrane sandwiched between compliant electrodes. Application of a (e.g. high voltage) electric field causes the membrane to change shape (e.g. by a decrease in thickness and increase in surface area).

In the expanded configuration of the fixturing element, the or each fixturing element DEA may have a voltage applied across the elastomeric membrane and in the contracted configuration of the fixturing element, the or each fixturing element DEA may have no voltage applied across the elastomeric membrane.

At least one or each deployment actuator and/or fixturing actuator may comprise a shape memory alloy e.g. at least one or each deployment and/or fixturing actuator may comprise an elastomer with embedded or external shape memory alloy elements e.g. strands. Application of a current through the elements results in a change in dimension (e.g. a length reduction) of the elements which effects a change in dimension of the (elastomeric) actuator.

At least one or each deployment and/or fixturing actuator may comprise a shape memory alloy e.g. at least one or each deployment/fixturing actuator may comprise an elastomer with embedded or external shape memory alloy elements e.g. strands. Application of a current through the elements results in a change in dimension (e.g. a length reduction) of the elements which effects a change in dimension of the (elastomeric) actuator.

At least one or each fixturing actuator may comprise a particle jamming bladder e.g. a bladder filled with alumina, silica or ceramic. Application of a vacuum to the bladder (in the expanded configuration) results in a stiffening of the bladder.

At least one or each fixturing actuator may comprise a combination of two or more of an inflatable bladder, a particle filled bladder, a dielectric elastomer and a shape memory alloy. In this way, the or each fixturing actuator may brace the tool against the cavity wall e.g. using the inflatable bladder and the dielectric elastomer or shape memory alloy may be used to effect fine adjustment of the positioning of the tool e.g. before and/or during use of the tool.

In some embodiments, the fixturing element may comprise a combination of two or more of the fixturing actuators described above.

In some embodiments, the device further comprises a fluid supply system for supplying the inflatable bladder deployment and or fixturing actuator(s) with fluid (e.g. air or hydraulic liquid). The fluid supply system may comprise a pump and a fluid feed line. The fluid feed line may extend internally through the deployment arm/device, or may extend externally to the deployment arm/device.

Each deployment/fixturing actuator may be independently controllable e.g. independently inflatable. In this way, the deployment arm and/or fixturing element may be manoeuvred/adjusted by selective and independent actuation (e.g. inflation and deflation) of the deployment/fixturing actuators.

The fixturing element and tool may be affixed proximal one another on the deployment arm/device e.g. at or proximal the distal end of the deployment arm/device. The fixturing element and tool may be arranged such that the fixturing element is located between the tool and the cavity wall along an axis in the direction of reactionary forces generated by operation of the tool. For example, the fixturing element and tool may be affixed and aligned with one another on opposing sides of the flexible deployment arm. This will help counter the reaction forces generated by the tool when the fixturing element is in its expanded configuration and braced against the cavity wall.

In other embodiments, the fixturing element may be annular and the fixturing element may at least partially encircle the deployment arm/device. For example, the fixating element may comprise a plurality of fixturing actuators (e.g. pneumatic/hydraulic bladders) circumferentially arranged around the deployment arm/device. This may be useful so that the annular fixturing element can abut and brace against more than one cavity wall in its expanded configuration.

The tool may comprise a surface cleaning tool such as a spray cleaning tool or a media blasting tool. Such a tool can be used for cleaning a surface e.g. cleaning the surface of a combustor tile within a gas turbine engine. The tool may comprise a turning tool e.g. for turning an engine shaft for facilitating inspection of rotors/blades/stators e.g. in the front section of a gas turbine engine. In this respect, the bracing element may be configured such that, in the expanded configuration, the tool is located (and retained) at a desired stand-off distance and/or angle relative to the shaft.

Where rotational reactional forces are generated during operation of the tool (e.g. when the tool is turning a shaft), the bracing of the fixturing element may, at least partially, be in the form of a frictional engagement between the fixturing element and cavity wall.

The fixturing element e.g. the or each actuator in the fixturing element may comprise an outer coating or an outer surface topology for increasing the coefficient of friction between the fixturing element and the cavity wall.

The positioning device may further comprise a vision system or the tool may comprise a vision system. The vision system may allow an operator to view the operation of the device (e.g. operation of the spraying or turning tool). The vision system may, for example, comprise a camera. Alternatively or additionally, a vision system that is separate to the device may be provided. Such a vision system may be introduced into the cavity by way of a different access port (e.g. bore) than the device.

In a second aspect, there is provided a method of positioning and using a tool within a cavity having a cavity wall, using a positioning device according to the first aspect, the method comprising positioning the tool within the cavity with the fixturing element in the contracted deployment configuration, expanding the fixturing element to its bracing configuration such that it abuts the cavity wall.

In some embodiments, the method may comprise contracting the fixturing element to its contracted configuration after use of the tool and removing the device from the cavity.

In some embodiments where the fixturing element comprises at least one inflatable bladder fixturing actuator, the method may comprise inflating the fixturing actuator bladder(s) into the expanded configuration after positioning of the tool. In some embodiments, the method comprises deflating the fixturing actuator bladder(s) into the contracted configuration after use of the tool.

The fixturing actuator bladder(s) may be inflated by pumping air or hydraulic fluid into the bladder(s) using the fluid supply system. The method may comprise fully inflating the fixturing actuator bladder(s) in the expanded configuration.

In some embodiments where the deployment device comprises a soft robotics arm having a plurality of inflatable bladders deployment actuators, the method may comprise using the fluid supply system to inflate the deployment actuator bladders. They may be independently/selectively inflated to position the tool in the desired location within the cavity.

In some embodiments, the cavity may be an annular cavity and the method may comprise bracing the fixturing element against the radially outer cavity wall in its expanded configuration.

In other embodiments, the fixturing element may be an annular fixturing element and the method may comprise bracing the annular fixturing element against the radially inner and radially outer cavity walls in its expanded configuration.

In some embodiments, the fixturing actuator(s) is/are actuated in the expanded configuration during use of the tool to effect adjustment of the tool position within the cavity (e.g. to ensure that the correct position is maintained within the cavity during use of the tool).

In some embodiments, the method comprises positioning and using a tool within a cavity having a cavity wall, wherein the cavity is within a gas turbine engine.

In some embodiments, the method may comprise cleaning a surface e.g. a combustor tile surface within a gas turbine using a surface cleaning tool such as a spray cleaning tool or a media blasting tool when the tool is braced against the cavity wall(s) by the fixturing element.

In some embodiments, the method may comprise turning an engine shaft e.g. for facilitating inspection of rotors/blades/stators e.g. in the front section of a gas turbine engine using a turning tool when the tool is braced against the cavity wall(s) by the fixturing element.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### Brief Description of the Drawings

Embodiments will now be described by way of example only with reference to the accompanying drawings in which:
**Figures 1A and 1B** show an embodiment of the positioning device being deployed in a cavity; and
**Figures 2A and 2B** show a further embodiment of the positioning device being deployed in a cavity.

### Detailed Description

Aspects and embodiments of the present disclosure will now be discussed with reference to the corresponding drawings. Other aspects and embodiments will be apparent to those skilled in the art.

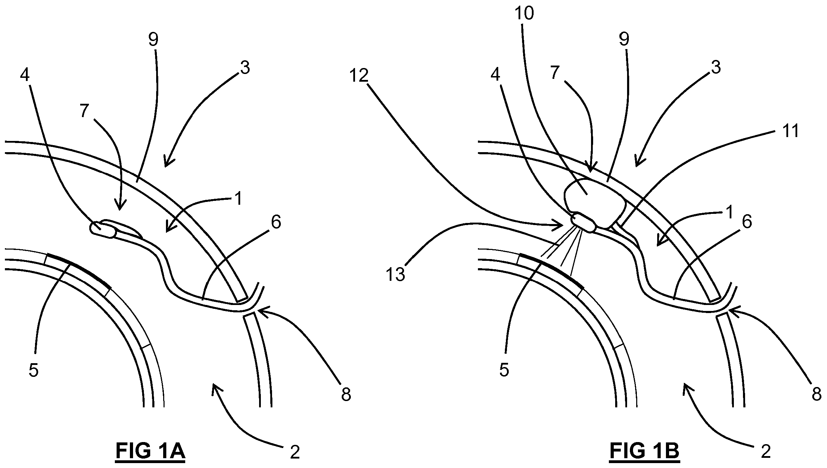

**Figure 1A** shows an embodiment of the device 1 being deployed in the cavity 2 of a gas turbine engine 3. In this case, the device 1 is being used for positioning and using a tool 4 within the cavity 2 for the purpose of repairing a combustor tile with a delaminated coating 5.

The device 1 comprises a flexible robotic deployment arm 6 (having multiple degrees of freedom) carrying the tool 4. The device further comprises a soft robotic fixturing element 7 disposed at an end of the deployment arm 6 that is adjustable between a contracted (deployment) configuration and an expanded (bracing) configuration. In Figure 1A the fixturing element 7 is in the contracted deployment configuration. In this configuration, the fixturing element 7 is able to pass through a bore 8 formed in a wall 9 defining the cavity 2 and can be manoeuvred within the cavity 2 so as to position the tool 4 in proximity to the delaminated coating 5 requiring repair.

Although not apparent from the figures, the deployment arm 6 is a soft robotic arm formed of a plurality of actuators arranged axially along a longitudinal axis of the compliant arm 6. Each of the flexible actuators comprises an inflatable pneumatic bladder, which can be fully or partially filled with air, independently of the other bladders, so as to be adjustable between inflated and deflated configurations. In this respect, each bladder may include one or more valves that selectively allow air to pass into or out of the bladder.

In the present embodiment, the bladders of the deployment arm 6 are in fluid communication with a fluid supply system (not shown) comprising a pump that supplies air to the bladders to inflate/deflate the bladders. In this way, the deployment arm 6 may be manoeuvred by partial or full inflation and deflation of the various bladders forming the deployment arm 6. Thus, the bends in the deployment arm 6, as shown in the figures, are formed by arrangements of fully inflated, partially inflated and deflated bladders.

**Figure 1B** shows the soft robotics fixturing element 7 in an expanded configuration. In this configuration a portion of the fixturing element 7 abuts the wall 9 defining the cavity 2. As will be described in more detail below, this abutment of the fixturing element 7 against the wall 9 helps to retain the tool 4 in a substantially fixed position in the cavity 2 during use of the tool 4.

The fixturing element 7 comprises a pneumatic inflatable bladder 10 (similar to those described above with respect to the deployment arm 6). In the expanded configuration (as shown in Figure 1B), the fixturing element bladder 10 of the fixturing element 7 is filled with fluid (in this case, air). Conversely, in the deflated configuration (as shown in Figure 1A), the bladder 10 is drained of air.

The pump (which supplies air to the bladders of the deployment arm 6) is also in fluid communication with the fixturing element bladder 10 of the fixturing element 7. In this way, air supplied by the pump can be used to inflate the fixturing element bladder 10. The air is supplied by a fluid feed line 11, which also forms part of the fluid supply system. Although not shown, the fixturing element 7 comprises a valve to control the flow of air into and out of the fixturing element bladder 10.

In the illustrated embodiment the tool 4 is a surface cleaning tool in the form of a media blasting tool. The media blasting tool 4 can be used to remove the delaminated coating 5 on the combustor tile and re-profile the surrounding area prior to a new coating being applied (using a separate tool). The tool 4 comprises a spray nozzle 12 that, when active, generates a force on the tool 4 that is in the opposite direction to the direction of the spray 13.

The fixturing element 7 is arranged so as to be located at an opposite side of the tool 4 to the spray nozzle 12. Hence, the deployment arm 6 can be manoeuvred such that the spray nozzle 12 of the tool 4 is directed at the delaminated coating 5, whilst the fixturing element 7 is located between the tool 4 and the wall 9 of the cavity 2. When arranged in this way, the fixturing element bladder 10 of the fixturing element 7 can be expanded so as to fill the space between the tool 4 and the internal wall of the cavity 2, such that a portion of the fixturing element 7 abuts the wall 9. Thus, when the spray nozzle 12 is activated (thus generating a reactionary force), the fixturing element 7 absorbs the reactionary force and prevents movement of the tool 4 relative to the delaminated coating 5. In this way, the spray 13 can be applied in an accurate manner (i.e. without any, or only minimal, movement of the tool 4) to the delaminated coating 5.

The spray nozzle 12 may also be reoriented by movement of the deployment arm 6 and/or inflation/deflation of the fixturing element bladder 10 of the fixturing element 7. That is, the direction of the spray 13 may be controlled by movement of arm 6 and/or fixturing element 7. Once the spraying operation is complete, the device 1 may be removed from the cavity 2 by returning the fixturing element bladder 10 of the fixturing element 7 to the contracted configuration and manoeuvring the deployment arm 6 back through the bore 8.

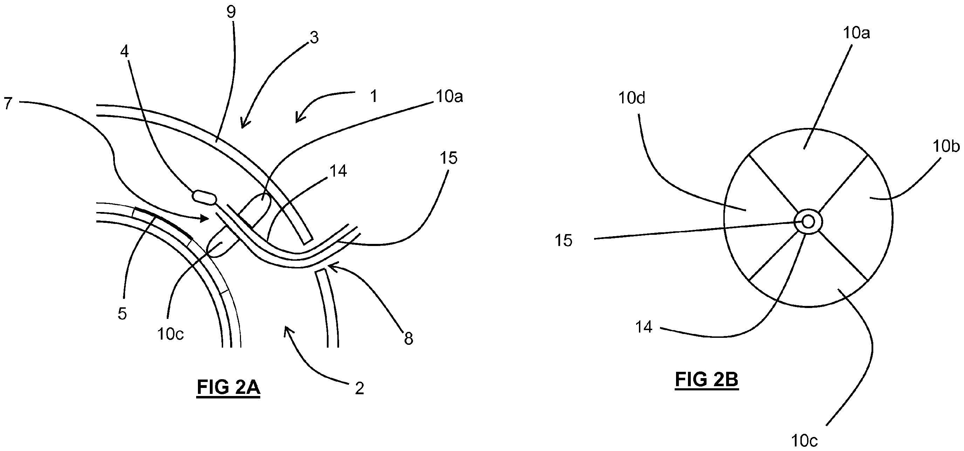

**Figure 2A** shows an alternative embodiment with the fixturing element 7 in an expanded configuration. It is the same as that in Figures 1A and 1B except that the deployment device comprises an articulating guide tube 14 and a flexible insertion element 15. The tool 4 is affixed at the end of the insertion element 15.

The fixturing element 7 is an annular fixturing element mounted on the guide tube 14 and comprising a plurality of fixturing element bladders 10a-d. **Figure 2B** shows a cross section view through the guide tube 14 with the fixturing element bladders 10a-d arranged circumferentially around the guide tube 14.

The bladders 10a-10d will abut against both the radially inner and outer walls of the cavity 2 thus bracing the guide tube 14 and also the tool 4 on the insertion element 15 within the guide tube 14.

It will be understood that the invention is not limited to the embodiments above-described and various modifications and improvements can be made without departing from the scope of the appended claims.

## Claims

1. A positioning device (1) for positioning and using a tool (4) within a cavity (2) of a gas turbine engine (3) having a cavity wall (9), the device comprising a flexible deployment device carrying the tool, wherein the deployment device further comprises a soft robotics fixturing element (7) adjustable between a contracted deployment configuration during positioning of the tool and an expanded bracing configuration for abutment with the cavity wall during use of the tool, wherein the deployment device comprises a segmented/articulated deployment arm or an articulated guide tube and insertion element, **characterized in that** the deployment arm is a soft robotic arm comprising a plurality of deployment actuators.

2. The device according to claim 1 wherein the fixturing element comprises one or more fixturing actuators.

3. The device according to claim 1 or 2 wherein at least one or each deployment actuator and/or fixturing actuator comprises an inflatable bladder (10).

4. The device according to any one of claims 1 to 3 wherein at least one or each deployment actuator and/or fixturing actuator comprises a dielectric elastomeric actuator.

5. The device according to any one of claims 1 to 3 wherein at least one or each deployment actuator and/or fixturing actuator comprises a shape memory alloy.

6. The device according to any one of claims 2 to 5 wherein the fixturing element comprises a plurality of fixturing actuators circumferentially-arranged around the deployment device.

7. The device according to any one of the preceding claims wherein the tool comprises a spray cleaning tool, a media blasting tool, a vision system or a turning tool.

8. A method of positioning and using a tool within a cavity having a cavity wall, using a positioning device according to any preceding claim, the method comprising positioning the tool within the cavity with the fixturing element in the contracted deployment configuration and expanding the fixturing element to its bracing configuration such that it abuts the cavity wall.

9. The method according to claim 8 wherein the or each fixturing actuator comprises an inflatable bladder, the method comprising inflating the fixturing actuator bladder(s) into the expanded configuration after positioning of the tool.

10. The method according to claim 8 or 9 wherein the cavity is an annular cavity, the method comprising bracing the fixturing element against the radially outer cavity wall in its expanded configuration.

11. The method according to claim 10 wherein the fixturing element is an annular fixturing element, the method comprising bracing the fixturing element against the radially inner cavity wall in its expanded configuration.

12. The method according to any one of claims 8 to 11 wherein the cavity is within a gas turbine engine.

13. The method according to claim 12 comprising cleaning a surface within a gas turbine using a surface cleaning tool when the tool is braced against the cavity wall by the fixturing element.

14. The method according to claim 12 comprising turning an engine shaft in a front section of the gas turbine engine using a turning tool when the tool is braced against the cavity wall by the fixturing element.

## Patentansprüche

1. Positioniervorrichtung (1) zum Positionieren und Verwenden eines Werkzeugs (4) innerhalb eines Hohlraums (2) eines Gasturbinentriebwerks (3) mit einer Hohlraumwand (9),
wobei die Vorrichtung eine flexible Entfaltungsvorrichtung umfasst, die das Werkzeug trägt, wobei die Entfaltungsvorrichtung ferner ein weiches Roboterfixierelement (7) umfasst, das zwischen einer eingezogenen Entfaltungskonfiguration während des Positionierens des Werkzeugs und einer expandierten Verstrebungskonfiguration zum Anliegen an der Hohlraumwand während der Verwendung des Werkzeugs einstellbar ist, wobei die Entfaltungsvorrichtung einen segmentierten/gelenkigen Entfaltungsarm oder ein gelenkiges Führungsrohr und Einführelement umfasst, **dadurch gekennzeichnet, dass**
der Entfaltungsarm ein weicher Roboterarm ist, der eine Vielzahl von Entfaltungsaktoren umfasst.

2. Vorrichtung nach Anspruch 1, wobei das Fixierelement einen oder mehrere Fixieraktore umfasst.

3. Vorrichtung nach Anspruch 1 oder 2, wobei mindestens ein oder jeder Entfaltungsaktor und/oder Fixieraktor eine aufblasbare Blase (10) umfasst.

4. Vorrichtung nach einem der Ansprüche 1 bis 3, wobei mindestens ein oder jeder Entfaltungsaktor und/oder Fixieraktor einen dielektrischen Elastomeraktor umfasst.

5. Vorrichtung nach einem der Ansprüche 1 bis 3, wobei mindestens ein oder jeder Entfaltungsaktor und/oder Fixieraktor eine Formgedächtnislegierung umfasst.

6. Vorrichtung nach einem der Ansprüche 2 bis 5, wobei das Fixierelement eine Vielzahl von Fixieraktoren umfasst, die in Umfangsrichtung um die Entfaltungsvorrichtung herum angeordnet sind.

7. Vorrichtung nach einem der vorhergehenden Ansprüche, wobei das Werkzeug ein Sprühreinigungswerkzeug, ein Medienstrahlwerkzeug, ein Sichtsystem oder ein Drehwerkzeug umfasst.

8. Verfahren zum Positionieren und Verwenden eines Werkzeugs innerhalb eines Hohlraums mit einer Hohlraumwand unter Verwendung einer Positioniervorrichtung nach einem der vorhergehenden Ansprüche, wobei das Verfahren das Positionieren des Werkzeugs innerhalb des Hohlraums mit dem Fixierelement in der eingezogenen Entfaltungskonfiguration und das Expandieren des Fixierelements in seine Verstrebungskonfiguration so umfasst, dass es an der Hohlraumwand anliegt.

9. Verfahren nach Anspruch 8,
wobei der oder jeder Fixieraktor eine aufblasbare Blase umfasst, wobei das Verfahren das Aufblasen der Fixieraktorblase(n) in die expandierte Konfiguration nach dem Positionieren des Werkzeugs umfasst.

10. Verfahren nach Anspruch 8 oder 9, wobei der Hohlraum ein ringförmiger Hohlraum ist, wobei das Verfahren das Verstreben des Fixierelements gegen die radial äußere Hohlraumwand in seiner expandierten Konfiguration umfasst.

11. Verfahren nach Anspruch 10, wobei das Fixierelement ein ringförmiges Fixierelement ist, wobei das Verfahren das Verstreben des Fixierelements gegen die radial innere Hohlraumwand in seiner expandierten Konfiguration umfasst.

12. Verfahren nach einem der Ansprüche 8 bis 11, wobei sich der Hohlraum innerhalb eines Gasturbinentriebwerks befindet.

13. Verfahren nach Anspruch 12, umfassend das Reinigen einer Oberfläche innerhalb einer Gasturbine unter Verwendung eines Oberflächenreinigungswerkzeugs, wenn das Werkzeug durch das Fixierelement gegen die Hohlraumwand verstrebt ist.

14. Verfahren nach Anspruch 12, umfassend das Drehen einer Triebwerkswelle in einem vorderen Abschnitt des Gasturbinentriebwerks unter Verwendung eines Drehwerkzeugs, wenn das Werkzeug durch das Fixierelement gegen die Hohlraumwand verstrebt ist.

## Revendications

1. Dispositif de positionnement (1) permettant de positionner et d'utiliser un outil (4) à l'intérieur d'une cavité (2) d'un moteur à turbine à gaz (3) possédant une paroi de cavité (9), le dispositif comprenant un dispositif de déploiement flexible portant l'outil, ledit dispositif de déploiement comprenant en outre un élément de serrage robotique souple (7) réglable entre une configuration de déploiement contractée pendant le positionnement de l'outil et une configuration de calage étendue pour la mise en butée avec la paroi de la cavité pendant l'utilisation de l'outil, ledit dispositif de déploiement comprenant un bras de déploiement segmenté/articulé ou un tube de guidage articulé et un élément d'insertion, **caractérisé en ce que** le bras de déploiement est un bras robotique souple comprenant une pluralité d'actionneurs de déploiement.

2. Dispositif selon la revendication 1, ledit élément de serrage comprenant un ou plusieurs actionneurs de serrage.

3. Dispositif selon la revendication 1 ou 2, au moins un ou chaque actionneur de déploiement et/ou actionneur de serrage comprenant une vessie gonflable (10).

4. Dispositif selon l'une quelconque des revendications 1 à 3, au moins un ou chaque actionneur de déploiement et/ou actionneur de serrage comprenant un actionneur élastomère diélectrique.

5. Dispositif selon l'une quelconque des revendications 1 à 3, au moins un ou chaque actionneur de déploiement et/ou actionneur de serrage comprenant un alliage à mémoire de forme.

6. Dispositif selon l'une quelconque des revendications 2 à 5, ledit élément de serrage comprenant une pluralité d'actionneurs de serrage disposés de manière circonférentielle autour du dispositif de déploiement.

7. Dispositif selon l'une quelconque des revendications précédentes, ledit outil comprenant un outil de nettoyage par pulvérisation, un outil de projection d'abrasif, un système de vision ou un outil tournant.

8. Procédé de positionnement et d'utilisation d'un outil à l'intérieur d'une cavité possédant une paroi de cavité, utilisant un dispositif de positionnement selon l'une quelconque des revendications précédentes, le procédé comprenant le positionnement de l'outil à l'intérieur de la cavité avec l'élément de serrage dans la configuration de déploiement contractée et l'extension de l'élément de serrage jusqu' à sa configuration de calage de sorte qu'il vienne en butée contre la paroi de la cavité.

9. Procédé selon la revendication 8, ledit ou chaque actionneur de serrage comprenant une vessie gonflable, le procédé comprenant le gonflage de la ou des vessies d'actionneur de serrage dans la configuration étendue après le positionnement de l'outil.

10. Procédé selon la revendication 8 ou 9, ladite cavité étant une cavité annulaire, le procédé comprenant le calage de l'élément de serrage contre la paroi de cavité radialement externe dans sa configuration étendue.

11. Procédé selon la revendication 10, ledit élément de serrage étant un élément de serrage annulaire, le procédé comprenant le calage de l'élément de serrage contre la paroi de cavité radialement interne dans sa configuration étendue.

12. Procédé selon l'une quelconque des revendications 8 à 11, ladite cavité se trouvant à l'intérieur d'un moteur à turbine à gaz.

13. Procédé selon la revendication 12, comprenant le nettoyage d'une surface à l'intérieur d'une turbine à gaz à l'aide d'un outil de nettoyage de surface lorsque l'outil est calé contre la paroi de la cavité par l'élément de serrage.

14. Procédé selon la revendication 12, comprenant la rotation d'un arbre de moteur dans une section avant du moteur à turbine à gaz à l'aide d'un outil tournant lorsque l'outil est calé contre la paroi de la cavité par l'élément de serrage.
